# EUROPÄISCHE PATENTSCHRIFT

(11) **EP 2 087 960 B1**
(45) Veröffentlichungstag und Bekanntmachung des Hinweises auf die Patenterteilung: **12.09.2012**
(21) Anmeldenummer: 09001489.5
(22) Anmeldetag: 04.02.2009
(51) Int. Cl.: B23D 61/12

(54) **Bandsägeblatt**
Belt saw blade
Lame de scie à ruban

(30) Priorität: 07.02.2008 DE 102008007954
(43) Veröffentlichungstag der Anmeldung: 12.08.2009
(73) Patentinhaber: Haas Maschinenbau GmbH, 42855 Remscheid (DE)
(72) Erfinder: Haas, Hans Robert, 42853 Remscheid (DE)
(74) Vertreter: Füssel, Michael

(56) Entgegenhaltungen:
- EP-A1- 0 531 879
- WO-A1-00/05022
- DE-A1- 4 009 259
- US-A- 4 685 368
- US-A1- 2002 096 499

## Beschreibung

Die Erfindung betrifft ein Bandsägeblatt, welches üblicherweise über zwei Rollen geführt wird und daher je Umlauf eine zweimalige Umlenkung erfährt.

Zu diesem Zweck sind die Enden des Bandsägeblattes zueinander komplementär geschnitten und miteinander in der Sägeblattebene zu einem Endlos-Bandsägeblatt verbunden. Der Oberbegriff von Anspruch 1 basiert auf der US 2002/0096499.

Derartige Bandsägeblätter werden insbesondere für Plan-, Kontur-, Gehrungs- und Trennschnitte verwendet.

Bandsägeblätter müssen den hohen Beanspruchungen durch Druck-, Biege- und Schubkräfte auch bei den nicht unerheblichen Temperaturen gewachsen sein, die sich aus den Schnittkräften zwischen Sägeblatt und Schneidgut ergeben.

Darüber hinaus unterliegen Endlos-Bandsägeblätter einer mit hohen Geschwindigkeiten stattfindenden fortlaufend krümmungsintensiven Umlenkung.

Daher werden hochwertige Stähle mit einer hohen Biegewechselfestigkeit für ein in Rede stehendes Bandsägeblatt verwendet.

Üblicherweise wird das Bandsägeblatt an seinen Enden mit stoffschlüssigen Fügeverfahren zu einem Endlos-Bandsägeblatt verbunden. Bei stoffschlüssigen Fügeverfahren, insbesondere beim Schweißen, treten Gefügeveränderungen auf. Hierbei werden die Materialeigenschaften des Bandsägeblattes in der Verbindungsstelle nachteilig verändert. Durch Normalglühen können die Gefügeveränderungen nur unvollständig beseitigt werden.

Der zu erwartende Schwachpunkt des Bandsägeblattes liegt somit eher in der stoffschlüssigen Verbindungsstelle der Sägeblattenden und nicht in dem verwendeten hochwertigen Material des Sägeblattes.

Ein Reißen des Bandsägeblattes aufgrund von Überbeanspruchung oder Materialermüdung ist also an der Verbindungsstelle der Sägeblattenden zu erwarten.

Aufgabe der Erfindung ist es, eine Verbesserung der Verbindungsstelle der Sägeblattenden eines Bandsägeblattes im Hinblick auf Überbeanspruchung oder Materialermüdung herbeizuführen.

Diese Aufgabe wird erfindungsgemäß dadurch gelöst, dass die Schnittkontur der jeweiligen Enden so verläuft, dass zumindestens Teilbereiche der zusammengesetzten Schnittkontur in Zugrichtung des Bandsägeblattes formschlüssig ineinander greifen.

Wesentlich hierbei ist, dass die zusammengesetzten Enden des Bandsägeblattes aufgrund der erfindungsgemäßen Schnittkontur einen Hinterschnittverbund bilden.

Nach dem stoffschlüssigen Zusammenfügen der Sägeblattenden sind somit Teilbereiche des Grundwerkstoffgefüges, die vom Fügeprozess unbeeinflusst ihre Materialeigenschaften beibehalten haben, in Zugrichtung des Bandsägeblattes miteinander verklammert.

Die Folge davon ist, dass Belastungen nicht in ihrer vollen Stärke an dem vom Fügeprozess beeinflussten Gefüge der Verbindungsnaht angreifen, sondern zusätzlich vom unbeeinflussten Gefüge des Grundwerkstoffes getragen werden.

Dies wäre bei einer sonst üblichen quer- und gradlinig zum Bandsägeblatt angeordneten Schnittkontur nicht der Fall. Hier müsste die gesamte Belastung von dem durch das Fügeverfahren beeinflussten Gefüge der Verbindungsnaht getragen werden.

Weiterhin ist wesentlich, dass eine Umlenkung des Bandsägeblattes stets an Stellen stattfindet, die zumindestens stellenweise vom Fügeprozess unbeeinflusstes Grundwerkstoffgefüge aufweisen.

Hierbei liegt der erzielbare Vorteil insbesondere in einer, vergleichsweise mit der Biegewechselfestigkeit an einer üblichen Verbindungsstelle, verbesserten Biegewechselfestigkeit im Bereich der Verbindungsnaht der Sägeblattenden.

Ein weiterer Vorteil der Erfindung liegt darin, dass kurzfristig auftretende Überbeanspruchungen an der Verbindungsstelle durch den erfindungsgemäßen Hinterschnittverbund der Sägeblattenden besser aufgenommen werden können. Ein sofortiges Reißen der Verbindungsnaht aufgrund von kurzfristiger Überbeanspruchung des Bandsägeblattes, wie es bei einer sonst üblichen Verbindung der Sägeblattenden zu befürchten wäre, ist hier nicht zu erwarten.

Zusätzlich zu den verbesserten Festigkeitseigenschaften des Verbindungsbereiches, sind die Sägeblattenden für den Fügeprozess fixierbar.

Da jeweils gleiche Zahntiefen auf einer gemeinsamen Geraden liegen, die parallel zu der glatten Bandseite des Bandsägeblattes angeordnet ist, ist es möglich, dass die Schnittkonturen beider jeweiligen Sägeblattenden an zwei Stellen von jeweils dergleichen Zahntiefe erfolgt. Dadurch wird selbst bei Varioverzahnungen die Zahnfolge nicht gestört.

Als Schnittkontur wird bevorzugt eine Schwalbenschwanzform, C-Form oder T-Form vorgeschlagen. Derartige Formen sind einfach herstellbar und weisen wenigstens zwei Teilbereiche auf, in denen die zusammengesetzten Sägeblattenden in Zugrichtung des Bandsägeblattes formschlüssig ineinander greifen.

Nach einem stoffschlüssigen Fügen der Sägeblattenden wird die Belastung im Gefüge der Verbindungsnaht somit auf zwei miteinander verklammerte Teilbereiche verteilt, die vom Fügeprozess unbeeinflusst ihre Materialeigenschaften beibehalten haben.

Ergänzend hierzu wird vorgeschlagen, dass die Schnittkontur mehr als eine einzige Hinterschnittzone aufweist. Hierzu wären beispielsweise mehr als eine der oben genannten Formen oder Kombinationen daraus denkbar, aber auch jede andere erfindungsgemäße Form für die Schnittkontur mit Hinterschnitt.

Weiterhin wird vorgeschlagen, dass die Form der Schnittkontur symmetrisch zu der zwischen glatter Bandkante und Zahnfuß liegenden mittleren Längsachse des Bandsägeblattes angeordnet ist.

Hierdurch wird eine symmetrische Lastverteilung entlang der zusammengesetzten Schnittkontur erreicht.

Als stoffschlüssige Verbindung der Sägeblattenden wird vorgeschlagen, dass die Schnittkontur entsprechend ihres Verlaufes verschweißt ist.

Vorzugsweise weist die Schnittkontur eine mit Laserstrahlverfahren erzeugte Schweißnaht auf.

Die Vorteile des Laserstrahlschweißens liegen in der großen Bearbeitungsgeschwindigkeit, der schmalen und schlanken Schweißnahtformen, der hohen Präzision und dem geringen thermischen Verzug. Darüber hinaus kann das Laserstrahlschweißen in der Regel auch ohne Zuführung eines Zusatzwerkstoffes ausgeführt werden.

Insbesondere eine schlanke und schmale Schweißnaht wirkt sich positiv auf die Größe der Teilbereiche aus, in denen sich vom Schweißprozess unbeeinflusstes Gefüge verklammert.

Gemäß der Erfindung weist das Bandsägeblatt eine Varioverzahnung auf, derart, dass für die erforderliche Länge des Bandsägeblattes die Schnittkontur des jeweiligen Endes von der gleichen Stelle jeweils übereinstimmender Zähne ausgeht.

Der Vorteil einer Varioverzahnung liegt in ihrer schwingungsdämpfenden Eigenschaft während des Betriebs.

Der Verschleiß am Bandsägeblatt kann somit verringert werden.

Darüber hinaus bietet eine derart an der Varioverzahnung angesetzte Schnittkontur stets die erforderliche Länge für das Bandsägeblatt, ohne dass die zusammengesetzten Sägeblattenden einen Versatz aufweisen.

Im Folgenden wird die Erfindung anhand von Ausführungsbeispielen näher erläutert.

Es zeigen:
- Fig.1: ein erfindungsgemäßes Bandsägeblatt mit einer C-förmig ausgeführten und zusammengesetzten Schnittkontur;
- Fig.2: ein erfindungsgemäßes Bandsägeblatt mit einer Schwalbenschwanzförmig ausgeführten und zusammengesetzten Schnittkontur;
- Fig.3: ein erfindungsgemäßes Bandsägeblatt, dessen Enden noch nicht zusammengesetzt sind.

Sofern im Folgenden nichts anderes gesagt ist, gilt die folgende Beschreibung stets für alle Figuren.

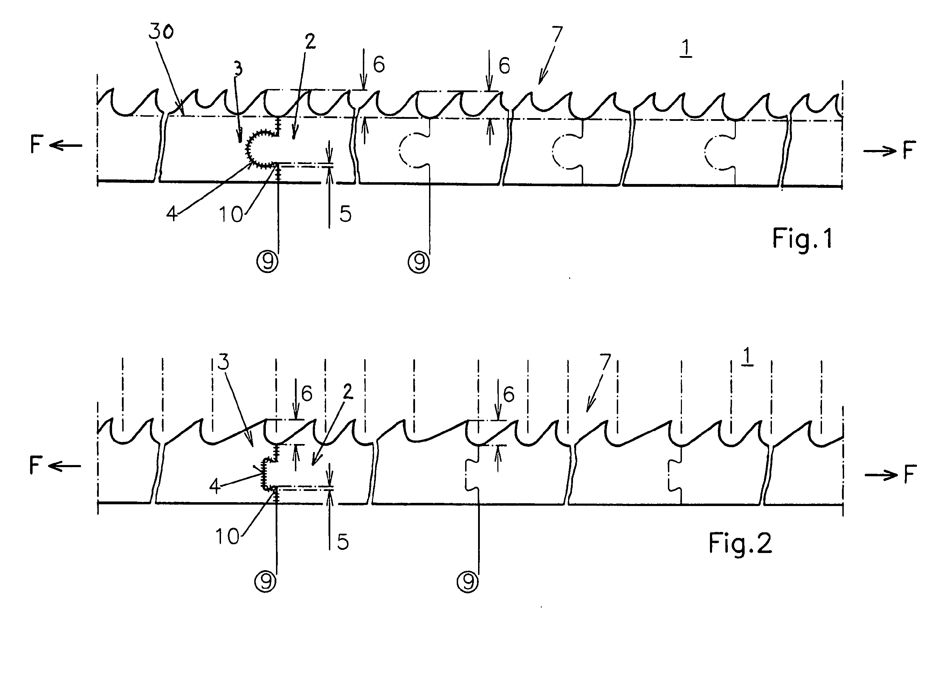

Insbesondere die Figuren 1 und 2 zeigen ein Bandsägeblatt 1, dessen jeweilige Enden 2 und 3 zueinander komplementär geschnitten und miteinander in der Sägeblattebene zu einem Endlos-Bandsägeblatt verbunden sind.

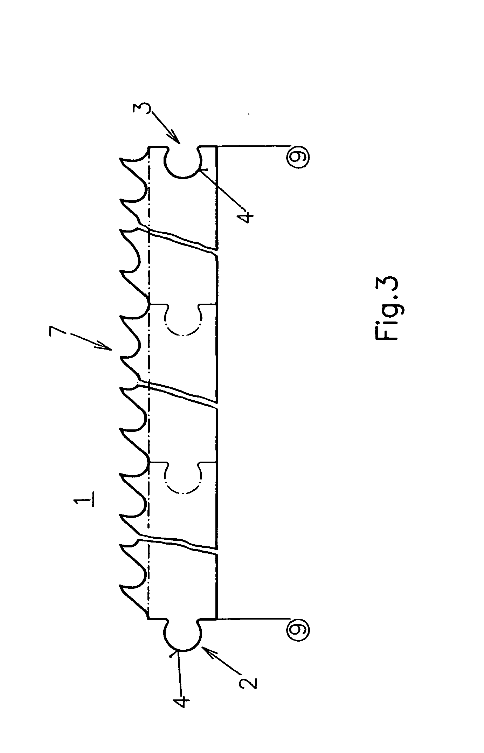

Ergänzend hierzu zeigt Fig.3 ein Bandsägeblatt 1 mit zueinander komplementär geschnittenen Enden 2 und 3, die noch nicht zu einem Endlos-Bandsägeblatt gemäß der Fig.1 und 2 verbunden sind.

Insbesondere in den Fig.1 und 2 ist zu erkennen, dass die Schnittkontur 4 der jeweiligen Enden 2 und 3 so verläuft, dass zumindest Teilbereiche 5 der zusammengesetzten Schnittkontur 4 in Zugrichtung des Bandsägeblattes 1 formschlüssig ineinander greifen.

Wesentlich hierbei ist nun, dass die zusammengesetzten Sägeblattenden 2 und 3 aufgrund ihrer erfindungsgemäßen Schnittkontur 4 in Zugrichtung des Bandsägeblattes 1 einen Hinterschnittverbund bilden. Die Schnittkontur 4 ist entsprechend ihres Verlaufes verschweißt. Durch diesen stoffschlüssigen Fügeprozess bildet sich entlang der Schnittkontur 4 das Grundgefüge des Sägeblattwerkstoffes zu einem Gefüge mit veränderten Eigenschaften um.

Der wesentliche Vorteil der erfindungsgemäßen Schnittkontur 4 liegt nun darin, dass vom Fügeprozess unbeeinflusstes Grundgefüge des Sägeblattwerkstoffes miteinander in den jeweils gezeigten Teilbereichen 5 verklammert ist.

Belastungen an der verbundenen Schnittstelle 9 der Sägeblattenden 2 und 3 greifen daher nicht in ihrer vollen Stärke an dem veränderten Gefüge der Schweißnaht 10 an, sondern werden in den Teilbereichen 5 zusätzlich vom Grundwerkstoffgefüge getragen, welches vom Fügeprozess unbeeinflusste Werkstoffeigenschaften aufweist.

Bei einer üblicherweise quer und geradlinig angeordneten Schnittkontur 4 der Sägeblattenden 2 und 3 tritt dieser Vorteil nach dem Fügen der Sägeblattenden 2 und 3 nicht auf. Hier würden Belastungen in ihrer vollen Stärke im veränderten Gefüge der Schweißnaht 10 wirken.

Im Hinblick auf die für den Gebrauch des Bandsägeblattes 1 optimalen Werkstoffeigenschaften des Grundwerkstoffes, bietet die Erfindung eine Verbindungsstelle der Sägeblattenden 2 und 3 mit annähernd gleichen Festigkeitseigenschaften.

Insbesondere anhand der Figuren 1 und 2 lässt sich leicht nachvollziehen, dass eine Umlenkung des Bandsägeblattes 1 im Bereich der Schweißnaht 10 stets an Stellen stattfindet, die zumindestens stellenweise vom Fügeprozess unbeeinflusstes Grundgefüge aufweisen.

Mit dem Gefüge der Schweißnaht 10 wird also stets Grundwerkstoffgefüge umgelenkt, dessen Biegewechselfestigkeit für eine fortlaufende krümmungsintensive Umlenkung ausgelegt ist.

Weiterhin zeigen die Fig. 1 und 2 dass zusätzlich zu den verbesserten Festigkeitseigenschaften der Schweißnaht 10 die Sägeblattenden 2 und 3 für den Fügeprozess, vergleichsweise wie Teile eines Puzzles, vorteilhaft zusammengesteckt werden können.

Die Schnittkontur 4 weist in den gezeigten Figuren 1 und 2 eine mit Laserschweißverfahren erzeugte Schweißnaht 10 auf. Insbesondere eine mit Laserstrahlschweißen realisierbare präzise und schlanke Schweißnahtform bewirkt eine Vergrößerung der Teilbereiche 5, in denen Werkstoffgefüge mit optimalen Belastungseigenschaften verklammert ist.

Die Figuren zeigen, dass die Schnittkontur 4 des jeweiligen Endes 2 und 3 von jeweils der gleichen Zahntiefe 6 ausgeht. Da jeweils gleiche Zahntiefen 6 auf einer gemeinsamen Geraden 30 liegen, die parallel zu der glatten Wandseite des Bandsägeblattes angeordnet ist, lassen sich die zusammengesetzten Enden 2 und 3 ohne Versatz im Zahnfußbereich zusammenstecken und insbesondere vollständig entlang der gemeinsamen Schnittlänge verschweißen.

Insbesondere in Fig.1 wird gezeigt, dass die Schnittkontur 4 eine C-Form aufweist.

Ergänzend dazu zeigt Fig.2, dass die Schnittkontur 4 eine Schwalbenschwanzform aufweist.

Derartige Formen für die Schnittkontur 4 bieten zwei Teilbereiche 5, in denen die zusammengesetzten Sägeblattenden 2 und 3 in Zugrichtung des Bandsägeblattes formschlüssig ineinander greifen. Nach dem Verschweißen der Sägeblattenden 2 und 3 wird die Belastung im Gefüge der Schweißnaht 10 somit auf 2 miteinander verklammerte Teilbereiche 5 verteilt, die vom Fügeprozess unbeeinflusst ihre Materialeigenschaften beibehalten haben.

Eine weitere denkbare Form für die Schnittkontur 4 wäre hierbei eine T-Form.

Ergänzend hierzu wäre ebenfalls denkbar, dass die Schnittkontur 4 mehr als eine einzige Hinterschnittzone aufweist.

Hierzu wäre bespielsweise mehr als eine einzige C-Form, T-Form, Schwalbenschwanzform oder es wären Kombinationen aus diesen oder anderen erfindungsgemäßen Formen für die Schnittkontur 4 denkbar.

In den Figuren ist zu erkennen, dass die Form der Schnittkontur 4 symmetrisch zu der zwischen glatter Bandseite und Zahnfuß liegenden mittleren Längsachse des Bandsägeblattes 1 angeordnet ist.

Hierdurch wird eine symmetrische Lastverteilung entlang der zusammengesetzten Schnittkontur 4 erreichbar.

Insbesondere in Fig.3 wird gezeigt, dass das Bandsägeblatt 1 eine Varioverzahnung 7 aufweist derart, dass für die erforderliche Länge des Bandsägeblattes 1 die Schnittkontur 4 der jeweiligen Enden 2 und 3 von der gleichen Stelle 9 jeweils übereinstimmender Zähne ausgeht.

Eine derart an der Varioverzahnung 7 angesetzte Schnittkontur 4 bietet stets die erforderliche Länge des Bandsägeblattes 1, um dieses zu einem Endlos-Bandsägeblatt zusammenzufügen, ohne dass die zusammengefügten Sägeblattenden 2 und 3 einen Versatz aufweisen.

Darüber hinaus liegt der Vorteil einer Varioverzahnung darin, dass das Bandsägeblatt 1 in Betrieb schwingungsdämpfende Eigenschaften ausnutzt und somit weniger Verschleiß an den Zähnen und eine geringere Beanspruchung an der Verbindungsnaht 10 vorhanden ist.

### Bezugszeichenliste

- 1: Bandsägeblatt
- 2: erstes Ende
- 3: zweites Ende
- 4: Schnittkontur
- 5: Teilbereich
- 6: Zahntiefe
- 7: Varioverzahnung
- 9: Schnittstelle
- 10: Schweißnaht
- 30: Zahnfußverbindungsgerade, gemeinsame Gerade

## Patentansprüche

1. Bandsägeblatt (1), dessen jeweilige Enden (2,3) zueinander komplementär geschnitten und entlang der Schnittkanten miteinander stoffschlüssig in der Sägeblattebene verbunden sind, wobei einerseits die Schnittkontur (4) und andererseits die Verbindungsnaht der jeweiligen Enden (2,3) so verlaufen, dass einerseits zumindest Teilbereiche (5) der zusammengesetzten Schnittkontur (4) in Zugrichtung des Bandsägeblattes (1) formschlüssig ineinander greifen und andererseits auch beide Enden (2,3) stoffschlüssig entlang derselben Schnittkontur zusammengefügt sind, **dadurch gekennzeichnet, dass** das Bandsägeblatt (1) eine Varioverzahnung (7) aufweist derart, dass für die erforderliche Länge des Bandsägeblatts (1) die Schnittkontur (4) des jeweiligen Endes (2,3) von der gleichen Stelle (9) jeweils übereinstimmender Zähne ausgeht.

2. Bandsägeblatt (1) nach Anspruch 1, **dadurch gekennzeichnet, dass** die Schnittkontur (4) entsprechend ihres Verlaufes verschweißt ist.

3. Bandsägeblatt (1) nach Anspruch 2, **dadurch gekennzeichnet, dass** die Schnittkontur (4) eine mit Laserschweißverfahren erzeugte Schweißnaht (10) aufweist.

4. Bandsägeblatt (1) nach einem der Ansprüche 1 bis 3, **dadurch gekennzeichnet, dass** die Schnittkontur (4) des jeweiligen Endes (2,3) von jeweils der gleichen zahntiefe (6) ausgeht.

5. Bandsägeblatt (1) nach einem der Ansprüche 1 bis 4, **dadurch gekennzeichnet, dass** die Schnittkontur (4) eine Schwalbenschwanzform aufweist.

6. Bandsägeblatt (1) nach einem der Ansprüche 1 bis 5, **dadurch gekennzeichnet, dass** die Schnittkontur (4) eine C-Form aufweist.

7. Bandsägeblatt (1) nach einem der Ansprüche 1 bis 6, **dadurch gekennzeichnet, dass** die Schnittkontur (4) eine T-Form aufweist.

8. Bandsägeblatt (1) nach einem der Ansprüche 1 bis 7, **dadurch gekennzeichnet, dass** die Schnittkontur (4) mehr als eine einzige Hinterschnittzone aufweist.

9. Bandsägeblatt (1) nach einem der Ansprüche 1 bis 8, **dadurch gekennzeichnet, dass** die Form der Schnittkontur (4) symmetrisch zu der zwischen glatter Bandkante und Zahnfuß liegenden mittleren Längsachse des Bandsägeblattes (1) angeordnet ist.

## Claims

1. Bandsaw blade (1), whose respective ends (2,3) are cut complementary to one another and are adhesively bonded to each other along the cutting edge on the saw blade plane, whereby on one side, the cutting profile (4) and on the other side, the connecting joint of the respective ends (2,3) run in such a way that on one side, at least some parts (5) of the compound cutting profile (4) positively interlock in the tensile force direction of the bandsaw blade (1) and on the other side, both ends (2,3) are also adhesively bonded along the same cutting profile, **characterised by** the fact that the bandsaw blade (1) exhibits a vario-toothing (7) such that, for the required length of the bandsaw blade (1), the cutting profile (4) of the respective end (2,3) comes from the same position (9) of each of the corresponding teeth.

2. Bandsaw blade (1) according to claim 1, **characterised by** the fact that the cutting profile (4) is welded corresponding to its course.

3. Bandsaw blade (1) according to claim 2, **characterised by** the fact that the cutting profile (4) exhibits a welded joint (10) created with laser-welding processes.

4. Bandsaw blade (1) according to one of the claims 1 to 3, **characterised by** the fact that the cutting profile (4) of the respective end (2,3) comes from the same tooth depth (6) each time.

5. Bandsaw blade (1) according to one of the claims 1 to 4, **characterised by** the fact that the cutting profile (4) exhibits a dovetail shape.

6. Bandsaw blade (1) according to one of the claims 1 to 5, **characterised by** the fact that the cutting profile (4) exhibits a C-shape.

7. Bandsaw blade (1) according to one of the claims 1 to 6, **characterised by** the fact that the cutting profile (4) exhibits a T-shape.

8. Bandsaw blade (1) according to one of the claims 1 to 7, **characterised by** the fact that the cutting profile (4) exhibits more than only one undercut zone.

9. Bandsaw blade (1) according to one of the claims 1 to 8, **characterised by** the fact that the shape of the cutting profile (4) is arranged symmetrically to the central longitudinal axis of the bandsaw blade (1) which lies between the smooth band edge and tooth base.

## Revendications

1. Lame de scie à ruban (1), dont les extrémités respectives (2,3) sont découpées de façon complémentaire l'une par rapport à l'autre et reliées ensemble sans palier le long de l'arête de coupe sur le plan de la lame de scie, ce faisant le profil de coupe (4) d'une part et la jonction des extrémités respectives (2,3) d'autre part défilent de telle façon que d'une part au moins certaines fractions (5) du profil de coupe (4) assemblées dans le sens de défilement de la lame de scie à ruban (1) s'imbriquent sans palier l'une dans l'autre et que d'autre part les deux extrémités (2,3) s'imbriquent aussi sans palier le long du même profil de coupe, **caractérisé par le fait que** la lame de scie à ruban (1) présente une imbrication variable (7) de telle manière que pour la longueur lame de scie à rubans (1) nécessaire le profil de coupe (4) des extrémités respectives (2,3) parte de la même position (9) des dents respectivement coïncidentes.

2. Lame de scie à ruban (1) selon la revendication 1 **caractérisée par le fait que** le profil de coupe (4) est soudé selon son tracé.

3. Lame de scie à ruban (1) selon la revendication 2 **caractérisée par le fait que** le profil de coupe (4) présente une soudure (10) produite avec des procédés de soudage au laser.

4. Lame de scie à ruban (1) selon une des revendications 1 à 3 **caractérisée par le fait que** le profil de coupe (4) des extrémités respectives (2,3) part respectivement de la même profondeur de dent (6).

5. Lame de scie à ruban (1) selon une des revendications 1 à 4 **caractérisée par le fait que** le profil de coupe (4) présente une forme de queue d'aronde.

6. Lame de scie à ruban (1) selon une des revendications 1 à 5 **caractérisée par le fait que** le profil de coupe (4) présente une forme en C.

7. Lame de scie à ruban (1) selon une des revendications 1 à 6 **caractérisée par le fait que** le profil de coupe (4) présente une forme en T.

8. Lame de scie à ruban (1) selon une des revendications 1 à 7 **caractérisée par le fait que** le profil de coupe (4) présente plus d'une seule zone de contre-dépouille.

9. Lame de scie à ruban (1) selon une des revendications 1 à 8 **caractérisée par le fait que** la forme du profil de coupe (4) est disposée symétriquement à l'axe longitudinal moyen de la lame de scie à ruban (1) situé entre l'arête lisse et le pied de dent.
